# EUROPÄISCHE PATENTSCHRIFT

(11) **EP 1 728 378 B1**
(45) Veröffentlichungstag und Bekanntmachung des Hinweises auf die Patenterteilung: **02.11.2016**
(21) Anmeldenummer: 05714961.9
(22) Anmeldetag: 11.02.2005
(51) Int. Cl.: H04M 3/54, H04M 1/00

(54) **UMLEITUNG VON ANRUFEN UM DEN NETZÜBERGANG ZWISCHEN FESTNETZ UND FUNKNETZ ZU VERMEIDEN**
REDIRECTING CALLS IN ORDER TO PREVENT THE CROSSOVER BETWEEN A FIXED NETWORK AND A RADIO NETWORK
RENVOI D'APPEL POUR EVITER UN TRANSFERT ENTRE UN RESEAU FIXE ET UN RESEAU RADIO

(30) Priorität: 16.03.2004 DE 102004013855
(43) Veröffentlichungstag der Anmeldung: 06.12.2006
(73) Patentinhaber: Deutsche Telekom AG, 53113 Bonn (DE)
(72) Erfinder: STEIMER, Franz, 17111 Nossendorf (DE); SCHIRRWITZ, Jörg, 12357 Berlin (DE)
(74) Vertreter: Nern, Peter-Michael
(86) Internationale Anmeldenummer: PCT/DE2005/000238
(87) Internationale Veröffentlichungsnummer: WO 2005/091611

(56) Entgegenhaltungen:
- EP-A- 0 456 128
- EP-A- 0 738 093
- EP-A- 0 740 480
- EP-A- 0 996 272
- EP-A- 1 033 897
- WO-A-97/24004
- DE-A1- 4 344 702
- DE-A1- 19 741 775
- DE-A1- 19 810 797
- US-A1- 2002 164 979
- US-A1- 2003 181 202

## Beschreibung

Die Erfindung betrifft ein Verfahren und eine Vorrichtung zur kostengünstigen Umleitung von Anrufen. Sie bezieht sich insbesondere auf das Gebiet der Rufumleitung/Rufweiterleitung von ankommenden Rufen innerhalb von unterschiedlich strukturierten Kommunikationsnetzen, wie das beispielsweise zwischen Festnetzen und Funknetzen mit mobilen Funknetz-Endgeräten der Fall ist.

Zur Rufwcitcrlcitung ist eine Vielzahl-von Lösungen bekannt.

So zeigt beispielsweise DE 100 59 327 eine Einrichtung und ein Verfahren zum Weiterleiten von Nachrichten an Endgeräte verschiedener Kommunikationsmedien. Durch diese Lösung soll die Erreichbarkeit eines Teilnehmers beim Wechsel zwischen mehreren, sowohl ortsfesten, als auch mobilen Endgeräten erreicht werden. Zu den mobilen Endgeräten werden dabei auch Handys gezählt. Diese Aufgabe wird von einer Telekommunikationseinrichtung mit einer Datenbank gelöst, welche teilnehmerspezifische Informationen betreffend eine Anzahl von Zielteilnehmem, sowie diesen zugeordnete Endgeräte und mit diesen Endgeräten kompatible Nachrichtenformate enthält. Die Steuerung der Prozesse erfolgt dabei über eine entsprechende Steuereinrichtung. Bei Empfang einer Nachricht für einen Zielteilnehmer wählt die Steuereinrichtung anband der teilnehmerspezifischen Informationen ein oder mehrere Endgeräte, über welche der Zielteilnehmer erreichbar ist, konvertiert die Nachricht mit Hilfe von Konversionsmoduln und leitet sie zum Senden an die ausgewählten Endgeräte weiter.

Bei dieser Lösung werden sowohl Anrufe aus dem Festnetz als auch Anrufe aus dem Mobilfunknetz an die durch die teilnehmerspezifischen Informationen festgelegten Endgeräte weitergeleitet.

Diese Lösung ist auf die Erreichbarkeit des Teilnehmers beim Wechsel zwischen mehreren Endgeräten, welche verschiedenen Typs sein können, ausgerichtet. Dabei auftretende Einsparungen betreffend Netzübergangskosten bzw. Kosten, die aus den Gebührenstrukturen des Kommunikationsnetzes selber resultieren, sind nicht Gegenstand der Lösung.
DE 199 15 548 A1 beschreibt ein Verfahren zur Kombination von Festnetz- und Mobilfunk-Telefonie. Diese Lösung basiert auf mindestens einer Heimatquelle, einem Festnetz, und einem Mobilfunknetz. Der Benutzer verfügt dabei über ein sowohl im Funknetzbetrieb, als auch im cordless-Mode arbeitendes Dualmodeendgerät. Der Nutzer ist unter einer Nummer über ein einziges Endgerät mit automatischer Netzwahl erreichbar und handlungsfähig.
Aus DE 198 10 797 ist ebenfalls ein netzübergreifendes Mobilitätsmanagement für Mehrbereichsendgeräte bekannt. Zur Steuerung der netzübergreifenden Erreichbarkeit eines Mehrbereichsendgerätes mit Mobilanschluss und Festnetzanschluss sendet das Mehrbcreichsendgerät dem Mobilfunknetz beim Eintreten in den Einzugsbereich des Festnetzes eine Mobilnetz-Ausbuchungsnachricht bzw. beim Verlassen eine Mobilnetz-Einbuchungsnachricht. Dadurch wird im Heimatregister des Mobilfunknetzes eine Erreichbarkeitsinformation, welche die Erreichbarkeit des Mehrbereichsendgerätes im Festnetz anzeigt, gesetzt bzw. gelöscht. Bei einer Verbindungsanforderung erfolgt eine Anfrage an das Heimatregister. In Abhängigkeit von der Erreichbarkeitsinformation wird die Verbindung zum Mobilfunknetz oder zum Festnetzanschluss des Mehrbereichsendgerätes geführt.
Bei dieser Lösung werden sowohl Anrufe aus dem Festnetz als auch Anrufe aus dem Mobilfunknetz in Abhängigkeit von einer Erreichbarkeitsinformation weitergeleitet. Auch hier stehen Netzübergangskosten bzw. Netzgebühren nicht im Vordergrund.

DE 102 15 318 A1 beschreibt ein Verfahren und eine Vorrichtung zur Kopplung von Mobilfunkkommunikationstechnik und Festnetzkommunikationstechnik, wobei von einem Mobilfunkendgerät über ein Funknetz ein im Festnetz eingebundenes Zusatzgerät angewählt wird und die Zugangsberechtigung des Anrufers überprüft wird. Bei positiver Zugangsüberprüfung erfolgt eine Leitungsöffnung und damit die Freischaltung einer Festnetzleitung. Danach wird direkt vom Mobilfunkgerät oder indirekt über ein Hilfsgerät aus dem Funknetz die gewünschte Teilnehmerrufnummer eingegeben und vom Zusatzgerät angewählt.

Diese Lösung ist für Telefonate aus dem Mobilfunknetz in das Festnetz konzipiert und soll die Nutzung günstiger Mobilfunktarife sowie Festnetztarife ermöglichen.

Aus DE 198 56 269A1 ist ein Verfahren zur Rufweiterleitung für einen von einer ersten Teilnehmerstelle an eine zweite Teilnehmerstelle gerichteten Anruf im öffentlichen Netz bekannt. Bei dieser Lösung wird die Rufnummer oder eine entsprechende Identifikation der ersten Teilnehmerstelle zur zweiten Teilnehmerstelle übertragen und dort zu einem Rufweiterleitungsspeicher geleitet. In Abhängigkeit einer im Rufweiterleitungsspeicher abgelegten Zieladresse wird über einen Rufdienst oder Datendienst die Rufnummer bzw. die entsprechende Identifikation und/oder eine Rückrufnachricht zu einem der zweiten Teilnehmerstelle zugeordneten Rufdienstteilnehmer oder einer Rufweiterleitungsstelle weitergeleitet. Der Rufdienstteilnehmer kann nach Erhalt der Rufnummernidentifikation entscheiden, ob er die rufende Teilnehmerstelle zurückrufen möchte.
Bei dieser Lösung werden nur die Rufnummer oder die Identifikation des Anrufers weitergeleitet. Eine gebührenpflichtige Verbindung wird in dieser Phase nicht aufgebaut. Es fallen nicht automatisch zusätzliche Gebühren für eine Rufumleitung an.
Es steht in der Entscheidung des angerufenen Teilnehmers ob er dem anrufenden Teilnehmer eine Rückrufnachricht zukommen lässt bzw. ob er den anrufenden Teilnehmer zurückruft.

Die US 2003/0181202 offenbart eine Lösung, nach welcher für ein Mobiltelefon bestimmte Anrufe automatisch auf ein Festnetztelefon umgeleitet werden, wenn die Anwesenheit des betreffenden Mobiltelefons in der Nähe einer dafür ausgebildeten Einrichtung detektiert wird. Dabei wird das Mobiltelefon durch die genannte Einrichtung zum Absenden einer SMS mit einer Weiterleitungsnachricht veranlasst. Bestandteil dieser Nachricht ist eine Verweisnummer auf einen Datenbankeintrag, unter welchem zuvor die Rufnummer des Festnetztelefons hinterlegt wurde, auf welches für das Mobiltelefon bestimmte Anrufe umgeleitet werden sollen. Die Nachricht wird einer Rufweiterleitungseinrichtung des Mobilfunknetzes zugeleitet, welche gegenüber dem Heimatregister des Mobittelefons ein Besucherregister emuliert und nach dem Empfang der Nachricht eine ständige Rufumleitung auf das in der Datenbank vermerkte Festnetztelefon aktiviert. Bei aktivierter Rufumleitung werden auch Anrufe anderer Mobilfunkteilnehmer auf das Festnetztelefon umgeleitet. Da die Rufumleitung ausgehend von dem angerufenen Endgerät erfolgt, werden Anrufe aus dem Festnetz, welche für das Mobiltelefon bestimmt sind, erst nach dem Verlassen des Festnetzes von den vorgenannten Einheiten des Mobilfunknetzes an das Festnetztelefon gemäß aktivierter Rufumleitung umgeleitet, so das in diesem Falle ein zweifacher Netzübergang stattfindet. Ein solcher zweifacher Netzübergang erfolgt auch gemäß der in der Druckschrift EP 0 996 272 A1 beschriebenen Lösung, welche insoweit mit der der vorgenannten Druckschrift vergleichbar ist.
Zwar können mittels einiger der zuvor beschriebenen Lösungen teilweise Telekommunikationskosten gespart werden, jedoch beruht diese Ersparnis nicht auf einer Vermeidung von Netzübergängen beziehungsweise netzübergreifender Verbindungen. Soweit die genannten Druckschriften Lösungen zur Rufumleitung betreffen, crgeben sich bei deren Nutzung aufgrund mehrfacher Netzübergänge teilweise sogar erhöhte Kosten, da die Rufumleitung jeweils durch Einrichtungen desjenigen Telekommunikationsnetzes realisiert wird, zu dem das als ursprüngliches Ziel eines dann jedoch umgeleiteten Anrufs bestimmte Endgerät gehört.
Aufgabe der Erfindung ist es eine Lösung zur Vermeidung netzübergreifender . Verbindungen bereitzustellen, um gegebenenfalls Netzübergangskosten sparen zu können. Hierzu sind ein Verfahren und eine Vorrichtung anzugeben.

Dabei sollen die Teilnehmer motiviert werden, das Wissen über ihren Aufenthalt weiterzugeben, um insbesondere ein Verbleiben von über das Festnetz ankommenden Anrufen im Festnetz oder von über ein Funknetz ankommenden Anrufen im Funknetz zu ermöglichen.

Die Aufgabe wird durch ein Verfahren mit den Merkmalen des Hauptanspruchs gelöst. Eine die Aufgabe lösende Vorrichtung ist durch den ersten Sachanspruch sowie den letzten Patenanspruch charakterisiert. Vorteilhafte Aus- oder Weiterbildungen der Erfindung sind durch die Unteransprüche gegeben.

Zur Lösung der Aufgabe wird über eine Servicerufnummer eine bedingte Rufumleitung aktiviert, gemäß welcher ein von einem Endgerät eines ersten Teilnehmers A ausgehender für ein erstes Endgerät eines zweiten Teilnehmers B bestimmter Anruf auf ein zweites alternatives Endgerät des Teilnehmers B umgeleitet wird. Eine Umleitung erfolgt jedoch erfindungsgemäß nur dann, wenn das Herstellen einer Verbindung zwischen dem Endgerät des Teilnehmers A und dem ersten Endgerät des Teilnehmers B eine netzübergreifende Verbindung erfordert, da der Dienst für die Rufumleitung auf einer Dienstplattform (INP) des Kommunikationsnetzes aktiviert wird, welchem das vorgenannte zweite alternative Endgerät des Teilnehmers B zugeordnet ist. Dadurch werden nur Anrufe aus diesem Kommunikationsnetz gegebenenfalls auf das zweite Endgerät des Teilnehmers B umgeleitet, während Anrufe aus anderen Kommunikationsnetzen nicht in den Dienst für die Rufumleitung einbezogen werden.

Ausgangspunkt der Erfindung ist die Überlegung, dass viele Teilnehmer in mehr als einem Netz erreichbar sind, und das viele Gespräche, bei denen der Teilnehmer über einen Festnetzanschluss eine Funkrufnummer anwählt, durchaus auch ausschließlich über das Festnetz geführt werden können, wenn der Teilnehmer
a) sich in der Nähe eines ihm zugeordneten Festnetzanschlusses befindet und
b) die Umleitung der im Festnetz gewählten Funkrufnummer auf eine ihm zugeordnete Festnetzrufnummer zulässt.

Das Gleiche gilt umgekehrt auch für Anrufe, bei denen ein Teilnehmer über eine Funknetz-Rufnummer eine Festnetz-Rufnummer anwählt. Diese Variante ist jedoch nur bei annähernd gleichen Kostenstrukturen in beiden Netzen sinnvoll.

Die Erfindung beinhaltet eine Lösung, die es einem Teilnehmer B unter bestimmten Bedingungen ermöglicht, für ihn ankommende Rufe, die von einem Festnetzanschluss eines Teilnehmers A ausgehen, jedoch für einen Funkrufanschluss des Teilnehmers B bestimmt sind, im Festnetz zu halten, sowie von Funknetz-Rufnummern FNB ankommende Anrufe die für ein Festnetz-Endgerät bestimmt sind an ein Funknetz-Endgerät des bestimmungsgemäßen Teilnehmers B weiterzuleiten und damit das Gespräch im Funknetz zu halten.

Zur zusätzlichen Motivierung wird der Teilnehmer B in Form einer Prämie an den eingesparten Netzübergangskosten beteiligt.

Da die Lösung sowohl für das Funknetz, als auch für das Festnetz auf den gleichen Wirkprinzipien beruht, wird nur der Fall näher erläutert, bei dem der Anruf von einem Festnetz-Endgerät ausgeht.

Die der Erfindung zugrunde liegende Lösung beruht darauf, dass nach an sich bereits bekannten Prinzipien der Rufumleitung/Rufweiterleitung aus dem Festnetz ankommende Anrufe, die für eine Funknetz-Rufnummer FNB des Teilnehmers B bestimmt sind, in Abhängigkeit vom Aufenthaltsort auf einen Festnetzanschluss des Teilnehmers B umgeleitet werden. Bei jedem erfolgreichen Verbindungsaufbau, bei dem die Kommunikation ausschließlich über das Festnetz geführt wird, erhält der Teilnehmer B zudem erfindungsgemäß eine Gutschrift für die Rufümleitung des ankommenden Anrufes auf die Rufnummer seines Festnetz-Anschlusses. Die Gutschrift resultiert aus den Netzübergangskosten, die dadurch eingespart wurden, dass die Kommunikationsverbindung zwischen Teilnehmer A und Teilnehmer B, nicht wie vom Teilnehmer A vorgesehen, über zwei unterschiedlich strukturierte Kommunikationsnetze, sondern ausschließlich über ein Kommunikationsnetz erfolgt ist. Die Gutschrift wird für den Teilnehmer B auf der Gebührenrechnung seines Festnetz-Anschlusses gutgeschrieben.

Die Rufumleitung, beispielsweise zu einer Festnetz-Rufnummer des Teilnehmers B, ist jedoch nur dann sinnvoll, wenn sich der Teilnehmer B auch in der Nähe des entsprechenden Festnetz-Anschlusses befindet. Zumeist wird das ein Heimanschluss des Teilnehmers B sein. Die Rufnummer des Heimanschlusses des Teilnehmers B wird nachfolgend mit Home-Nummer HNB bezeichnet. Die Effizienz der Lösung lässt sich dadurch steigern, dass mindestens noch eine zweite Festnetz-Rufnummer des Teilnehmers B in das Verfahren einbezogen wird, welche nachfolgend mit Partner-Nummer PNB bezeichnet wird. Die Partner-Nummer PNB ist für die Umlenkung eines ankommenden Anrufes zu einem alternativen Aufenthaltsort des Teilnehmers B vorgesehen. Das kann beispielsweise ein Festnetz-Endgerät am Arbeitsplatz des Teilnehmers B sein. Die Gutschrift erfolgt dabei, auch bei Weiterleitung des betreffenden Anrufes auf die Partner-Nummer PNB, weiter zugunsten der Home-Nummer HNB des Teilnehmers B.

Die Realisierung der Erfindung erfolgt vorzugsweise über eine Dienstplattform eines Anbieters, welcher ein entsprechendes Dienstmerkmal, bzw. einen entsprechenden Dienst auf seiner Dienstplattform INP implementiert hat.

Auf der Dienstplattform INP werden alle für den Dienst in Frage kommenden Funknetz-Rufnummern FNB und Festnetz-Rufnummern des betreffenden Teilnehmers B in einer dienstespezifischen Datenbank erfasst und mit einer entsprechenden Zuordnung versehen.

Jede Funknetz- Rufnummer FNB und jede Festnetz- Rufnummer darf dabei nur einmal verwendet werden. Daraus resultiert, dass eine als Home-Nummer HNB verwendete Festnetz-Rufnummer als Partner-Nummer PNB ausscheidet.

Zwischen Funknetz- Rufnummer FNB und Festnetz- Rufnummer gibt es eine 1:1-Beziehung in Bezug auf Funknetz-Rufnummer FNB und Home-Nummer HNB und in Bezug auf Funknetz-Rufnummer FNB und Partner-Nummer PNB.

Mit dieser Beziehung lassen sich mit einer der drei Rufnummern stets die anderen beiden Rufnummern ermitteln.

In einem Registrierungsprozess muss der Teilnehmer B gegenüber dem Dienstanbieter die Home-Nummer HNB, die Partner-Nummer PNB und die Funknetz-Rufnummer FNB bekannt geben. Das Einrichten einer Partner-Rufnummer PNB kann jedoch auch optional erfolgen.

Die Aktivierung des Dienstes erfolgt über einen Steueranruf, der durch einen bereits registrierten Teilnehmer ausgelöst wird, und zwar in Abhängigkeit vom jeweils verwendeten Endgerät, entweder über eine dem Festnetz zugeordneten Servicerufnummer, oder über eine dem Funknetz zugeordneten Servicerufnummer. Über die Servicerufnummer in Kombination mit der Ursprungsnummer, von der aus der Steueranruf erfolgt, bestimmt der Teilnehmer B die Funknetz-Rufnummer FNB, die Home-Nummer HNB und die Partner-Nummer PNB, auf die aus dem Festnetz abgehende Anrufe, die für eine Funknetz-Rufnummer FNB des Teilnehmers B bestimmt sind, geführt werden sollen. Der Dienstplattform INP werden aus dem Festnetz Informationen über alle Anrufe zu Funkrufnummern zugeführt. Die Dienstplattform INP sorgt dafür, dass bis auf Widerruf alle weiteren Anrufe, die aus dem Festnetz kommen und eine Funknetz-Rufnummer FNB des Teilnehmers B als Anrufziel haben, im Festnetz verbleiben und auf den Festnetzanschluss (Home-Nummer HNB oder Partner-Nummer PNB) umgeleitet werden oder dem Funkruf-Anschluss zugeführt werden, wie es vom letzten Steueranruf eingestellt wurde.

Zur Erleichterung der Umschaltung für den Teilnehmer ist erfindungsgemäß am Standort des Home- und/oder des Partner-Anschlusses eine Umschaltvorrichtung angeordnet, die als Ablageschale mit Ablagemulde ausgebildet ist. Die Ablageschale dient zur Aufnahme eines Funknetz-Endgerätes, beispielsweise eines Handys. In der Ablagemulde ist ein Schaltelement, angeordnet, das durch das Ablegen des Handys in der Ablagemulde ausgelöst wird. Die Betätigung des Schaltelementes aktiviert einen Anruf zu einer Servicerufnummer, welche die Umleitung der aus dem Festnetz ankommenden Funkrufe auf das Endgerät des Festnetzanschlusses, in dessen Nähe sich die Umschaltvorrichtung befindet, bewirkt. Wird das Handy aus der Ablagemulde der Umschaltvorrichtung wieder entfernt, wird durch erneute Betätigung des Schaltelementes ein Steueranrufauf eine zweite Servicenummer aktiviert und die Umschaltfunktion wieder rückgängig gemacht.
Erfindungsgemäß ist das Verfahren weiterhin so gestaltet, dass beim Entfernen des ersten Endgeräts des Teilnehmers (B) aus der Ablageschale das erste Schaltelement erneut betätigt und hierdurch zeitlich verzögert ein Anruf zu, einer vorgespeicherten, den Dienst deaktivierenden Servicenummer erfolgt. Dem Teilnehmer (B) ist es hierbei aber möglich, durch manuelle Betätigung eines zweiten Schaltelements der Ablageschale ein unmittelbares und unverzögertes Absetzen des Anrufs der den Dienst deaktivierenden Servicerufnummer auszulösen, so dass eine sofortige mobile Erreichbarkeit des mobilen Funknetz- Endgerätes des zweiten Teilnehmers (B) gegeben ist.
Eine weitere Möglichkeit bestünde darin, das bestimmungsgemäße Festnetzendgerät mit einem Detektor auszurüsten, welcher die Anwesenheit des Funknetz- Endgerätes erfasst. Wenn der Detektor die Anwesenheit des Funknetz-Endgerätes erfasst, wird entsprechend dem bereits bei der Umschaltvorrichtung beschriebenen Prinzips automatisch eine Rufumleitung auf das betreffende Festnetz-Endgerät, dem der Detektor zugeordnet ist, vorgenommen. Die Rufumleitung wird wieder aufgehoben, wenn der Detektor die Anwesenheit des Funknetz-Endgerätes nicht mehr erfasst.

Die Erfindung wird anhand eines Ausführungsbeispieles für einen Dienst, der auf einer Dienstplattform INP implementiert ist, beschrieben.

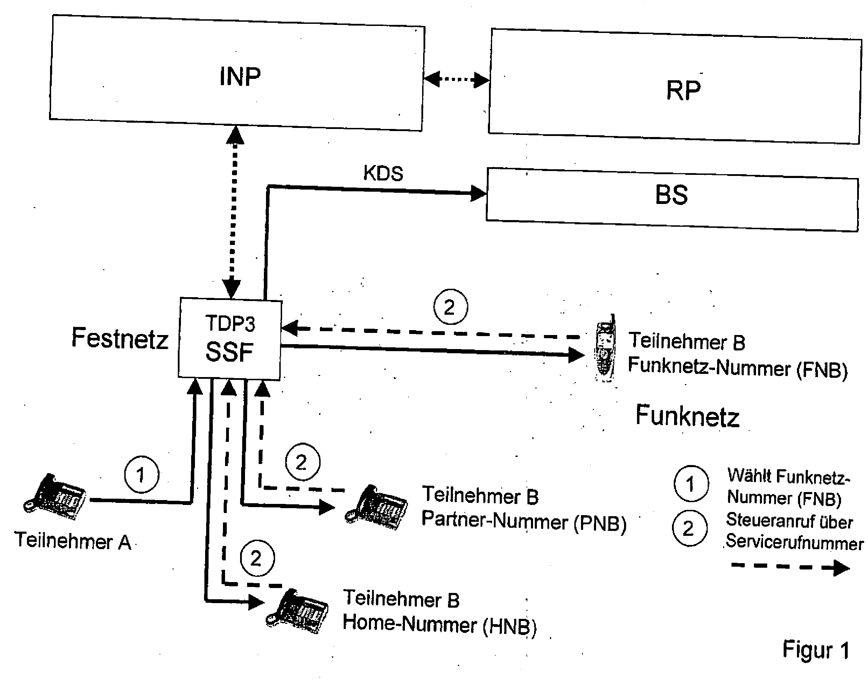

Figur 1 zeigt ein Ausführungsbeispiel für die Implementierung der Lösung auf einer Dienstplattform eines Dienstanbieters im Intelligenten Netz INP.
Auf der in Fig. 1 abgebildeten Dienstplattform INP sind dabei sowohl die für den Dienst angemeldeten Teilnehmer mit ihren entsprechenden Rufnummern, wie Funknetz-Rufnummer FNB, Home-Nummer HNB und Partner-Nummer PNB, als auch, soweit eine Einschränkung des Dienstes auf Ursprungs- und Ziel-Anschlüsse innerhalb eines bestimmten Netzes erforderlich ist, die Zugehörigkeit von Rufnummern zu bestimmten Netzen abgebildet.

Die nachgeordnete Tabelle 1 zeigt auf,wie die am die am Diens teilnehmenden Kunden auf der Dienstplattform INP abgebildet sind. In den Feldern Funknetz- Rufnummer FNB, Home-Nummer HNB und Partner-Nummer PNB sind keine doppelten Einträge zulässig. Eine Nummer, die als Home-Nummer HNB verwendet wird, kann nicht gleichzeitig als Partner-Nummer verwendet werden und umgekehrt.

**Tabelle 1**

| Funknetz- Rufnummer FNB | Funkrufnummer, die ggf. in das Festnetz umgeleitet werden soll. |
|---|---|
| Status | Gibt an, wie der Kunde erreicht werden will: |
| | @mobile - auf seiner Funknetz-Rufnummer FNB |
| | @home - auf seiner Home-Nummer HNB im Festnetz |
| | @partner - auf seiner Partner-Nummer FNB im Festnetz |
| Home-Nummer HNB | Festnetzrufnummer, für die Gutschriften erteilt werden. Erstes Alternativziel zur Funknetz-Rufnummer FNB im Festnetz |
| Partner-Nummer PNB | Zweites Alternativziel zur Funknetz-Rufnummer FNB im Festnetz |
| Verfall@home | Verfallsdatum der Home-Nummer HNB bei fehlender Dienstnutzung |
| Verfall@partner | Verfallsdaturn der Partner-Nummer PNB bei fehlender Dienstnutzung |
| Verfall@mobile | Verfallsdatum der Funknetz- Rufnummer FNB bei fehlender Dienstnutzung |

Gesteuert wird der Dienst über Servicerufnummem. Je nach ihrer Erreichbarkeit aus dem Festnetz- oder aus einem Funknetz können dabei unterschiedlich tarifierte Rufnummern verwendet werden.
Ein Kunde, der am Dienst teilnehmen möchte, wird in einem einmaligen Prozess für den Dienst auf der Diensteplattform INP des Diensteanbieters registriert.
Ziel dieses Registrierungsprozesses ist das Gewinnen einer eindeutigen Zuordnung zwischen einer Funknetz-Rufnummer FNB und einer mit Home-Nummer HNB bezeichneten Festnetz-Rufnummer eines Teilnehmers B, die nach erfolgreichem Prozessabschluss zusammen auf der Dienstplattform INP abgelegt werden.

Die Registrierung einer zusätzlichen Partner-Nummer PNB ist optional.
Dabei ist zu beachten, dass weder die Funknetz-Rufnummern FNB, noch die Festnetz-Rufnummern (HNB oder PNB) in einer bereits existierenden Zuordnung vorkommen dürfen und, dass die beteiligten Festnetz-Rufnummem bei einem am Dienst beteiligten Festnetzbetreiber geschaltet sein müssen. Registrierungen sind bei diesem Ausführungsbeispiel nur vom Home-Festnetz-Anschluss aus möglich. Die Nummer des ersten Festnetz-Anschlusses des Teilnehmers B ist die zu registrierende Home-Nummer HNB. Diese Rufnummer darf nicht zu einem Payphone gehören.
Nachfolgend wird der Registrierungsvorgang auf der Diensteplattform INP am Beispiel einer Festnetzrufnummer und einer 0800 Servicerufnummer näher erläutert.
Zum Anstoß des Registrierungsprozesses wählt der Teilnehmer Beine Administrationsnummer 0800-Admin. Der Anruf wird auf die Dienstplattform INP geführt. Dies geschieht entsprechend der allgemeinen IN-Architektur durch Auslösen eines Triggerpunktes bezogen auf die gewählte Servicerufnummerngasse 0800.
Die Dienstplattform INP routet den Anruf auf die Registrierungsplattform RP.

In einem Userdialog mit MFV- Eingabe muss ein Teilnehmer B, der am Dienst teilnehmen möchte, für seine Registrierung eine Funknetz-Rufnummer FNB bekannt geben, die mit der Festnetz-Rufnummer des Teilnehmers B (Home-Nummer HNB) verknüpft werden soll. Zur Überprüfung der erlaubten Zuordnung zwischen der von der Dienstplattform INP automatisch erkannten Home-Nummer HNB und der vom Teilnehmer B eingegebenen und zur Bestätigung angesagten Funknetz-Rufnummer FNB, sendet die Registrierungsplattform RP eine PIN als SMS an das Funktelefon mit der Funknetz-Rufnummer FNB. Innerhalb einer festgelegten Karenzzeit muss der Teilnehmer B von seinem Festnetz-Anschluss mit der zugeordneten Home-Nummer HNB erneut die Administrationsnummer 0800-Admin anrufen. Der Anruf wird wieder über die Dienstplattform INP auf die Registrierungsplattform RP geleitet. In einem zweiten User-Dialog muss der Teilnehmer B die auf seinem Funknetztelefon empfangene PIN eingeben. Ist die PIN richtig, kann das Rufnummernpaar, bestehend aus der Festnetz-Nummer HNB und der Funknetz-Rufnummer FNB, auf der Dienstplattform INP als gültig eingetragen werden.

Erfolgt innerhalb einer festgelegten Karenzzeit kein Rückruf vom gleichen Festnetzanschluss wird der offene Registrierungsprozess gelöscht. Ein späterer Anruf mit PIN-Eingabe ist zwecklos.
Erfolgt der Rückruf rechtzeitig, wird aber wiederholt eine falsche PIN eingegeben, beginnt der Registrierungsprozess von vorne.
Nach der Eingabe der gültigen PIN wird dem Teilnehmer die zusätzliche Eintragung einer zweiten Festnetz-Rufnummer, Partner-Rufnummer PNB, angeboten Nimmt der Teilnehmer das Angebot an, wird das über einen MFV-Dialog erfasst und dem Kunden nach Abschluss der Eingabe angesagt. Nach Bestätigung durch den Kunden wird auch die Partner-Rufnummer PNB in der betreffenden Datenbank der Diensteplattform INP vermerkt.
Der Status des Kundeneintrags ist nach der Registrierung @Mobile. Daher erfolgt zunächst keine Anrufumleitung auf die registrierte Home- oder Partner-Nummer.
Die Rufnummer 0800-Admin wird neben der Registrierung auch für das Löschen von Registrierungen verwendet. Um welchen konkreten Geschäftsvorfall es sich handelt, ergibt sich aus der Prüfung, ob die Nummer des anrufenden Teilnehmers B bereits auf der Dienstplattform INP als Home-Nummer HNB eingetragen ist. Dementsprechend startet auf der Registrierungsplattform RP ein Userdialog für den einen oder den anderen Geschäftsvorfall.
Handelt es sich im Rahmen der Registrierung bei der Ursprungsrufnummer (Home-Nummer HNB) oder bei der eingegebenen Partner-Nummer PNB um Rufnummern aus einem nicht für den Dienst vorgesehenen Festnetz, aus einem nicht für den Dienst vorgesehenen Anschluss (z.B. Payphone) oder aus einem Funknetz, erfolgt eine Ansage dass der Dienst grundsätzlich nur von den Rufnummern der Festnetze genutzt werden kann, die in den Dienst integriert sind. Um alle Fälle bewerten zu können, ist ein Zugriff auf die Portierungsdaten der Festnetz-Anschlüsse und auf die Signalisierung im Netz notwendig.

In einer möglichen Ausführungsform wird der Dienst vom Teilnehmer B selberüber eine Servicerufnummer aktiviert. Dabei gibt der Teilnehmer B durch einen Steueranruf über eine Servicerufnummer den Anstoß zur Umleitung von aus dem Festnetz ankommenden Anrufen, die für seine registrierte Funknetz-Rufnummer FNB bestimmt sind, auf eine ebenfalls für ihn registrierte Festnetz-Rufnummer (Home Nummer HNB oder Partner Nummer PNB) in deren Nähe er sich gegenwärtig aufhält.
Die Umschaltfunktion auf ein Festnetz-Endgerät kann aus dem jeweiligen Netz heraus, in dem der Teilnehmer B sich gegenwärtig befindet, ausgelöst werden.
Dabei sind zwei Varianten möglich:
a) Aus dem Festnetz, unabhängig davon, ob eine Erreichbarkeit im Festnetz oder im Mobilfunknetz gewünscht wird.
b) Aus dem Mobilfunknetz, unabhängig davon, ob eine Erreichbarkeit im Festnetz oder im Mobilfunknetz gewünscht wird.
Zur Aktivierung der Umschaltfunktion und damit zur Aktivierung des Dienstes, werden ebenfalls Servicerufnummern genutzt, die je nach ihrer Erreichbarkeit aus dem Festnetz- oder Funknetz in unterschiedlich tarifierten Rufnummemgassen liegen können Nachfolgend wird der Ablauf für die Aktivierung der Umleitung von aus dem Festnetz ankommenden Anrufen zu einer Festnetz-Rufnummer des Teilnehmers B beschrieben:
Aus dem Festnetz oder einem Funknetz wählt der Teilnehmer B die zugeordnete Servicerufnummer an. Es wird eine Rufbehandlung auf der Dienstplattform INP angefordert. Die Dienstplattform INP ermittelt die Ursprungsrufnummer CgPNo des anrufenden Teilnehmers im Rahmen der Signalisierung. Kann die Ursprungsnummer CgPNo identifiziert werden als für den Dienst registrierte Funknetz-Rufnummer FNB, Home-Nummer HNB oder Partner-Nummer PNB, wird auf der Diensteplattform INP der entsprechende Status gesetzt. Alle weiteren Anrufe auf die zugeordnete Funknetz-Rufnummer FNB werden dann entsprechend dem Status behandelt. Für den Fall, dass eine Statusänderung erfolgreich durchgeführt werden konnte, wird der Anruf mit einer Netzansage "Das Dienstmerkmal ist aktiviert" beendet. Konnte keine Änderung des Erreichbarkeitsstatus vorgenommen werden, z.B. wenn die Ursprungsnummer CgPNo nicht auf der Dienstplattform INP identifiziert werden konnte, wird die Verbindung mit einer Netzansage "Dienst oder Dienstmerkmal nicht möglich." beendet.

Die Erfindung wird anhand eines Ausführungsbeispiels näher erläutert.

Anhand von Fig. 1 wird die Kernfunktion des Dienstes, nämlich das Screenen des Draht-Funk-Verkehrs mit optionaler Umleitung in das Festnetz nach erfolgter Registrierung und Serviceanruf zur Aktivierung der Umleitung von Anrufen auf das aktuelle Festnetzendgerätes des Teilnehmers B näher erläutert.

Der funktionale Ablauf ist hierbei wie folgt:
1. Ein Festnetzkunde, Teilnehmer A wählt die Funknetz-Rufnummer FNB eines Teilnehmers B.
2. Die Service Switching Function SSF triggert über den Trigger Detection Point 3 (TDP3) die Dienstplattform INP.
3a Der ankommende Anruf wird bei nicht aktiviertem Dienst an die bestimmungsgemäße Funknetz-Rufnummer FNB (Status: @mobile) weitergeleitet.
3b Der ankommende Anruf wird bei aktiviertem Dienst zu dem bestimmungsgemäßen Festnetz-Anschluss, Home-Nummer HNB (Status: @home) oder Partner-Nummer PNB (Status:@Partner) umgeleitet.

Die Gesprächszustellung auf einen Festnetzanschluss ist jedoch nur zulässig, wenn der Anruf
a) aus einem für diesen Dienst vorgesehenen Festnetz erfolgt, und
c) die Ursprungsnummer CgPNo und die Redirecting Numbcr RdgNo nicht mit dem Umleitungsziel identisch sind,
in allen anderen Fällen wird der ankommende Anruf nicht in den Dienst einbezogen und zum bestimmungsgemäßen Funknetz weitergeleitet.

Die Beachtung von CgPNo und RdgNo in Verbindung mit den abgelegten Umleitungszielen in der Dienstplattform ist zur Verlneidung von sogenannten Kreisroutings unumgänglich.

Mit dem Melden eines Ziels im Festnetz wird der Eintrag Verfall @home oder @partner (siehe Tabelle 1) z.B. 2 Monate vor die aktuelle Zeit gestellt. Das Melden eines Ziels in einem Funknetz löst das Vorstellen des Eintrags Verfall @mobile, beispielsweise ebenfalls um zwei Monate, aus. Erreicht die aktuelle Zeit ein eingestelltes Verfallsdatum, kommt es zum kompletten Löschen einer Registrierung (bei Verfall @home, Verfall@mobile) bzw. nur zum Löschen des optionalen Eintrags der Partner-Nummer PNB (Verfall@partner) in der Registrierung. Mit diesem Verfahren wird sichergestellt, dass nicht mehr erreichbare Festnetz- und Funkruf-Nummern aus der Datenbank der Dienstplattform INP entfernt werden.
Wenn eine Umleitung in das Festnetz erfolgt, veranlasst die Dienstplattform INP sowohl die Überwachung des Gesprächs bis zum Ende, als auch das Erstellen eines Kommunikationsdatensatz KDS für die Ermittlung der Gutschrift.
Die Gesprächsüberwachung erfolgt vorteilhaft in der Service Switching Function von der das Triggern der Dienstplattform INP vorgenommen wurde.
Die Kommunikationsdatensätze KDS werden, wie andere Kommunikationsdatensätze, aus der Service Switching Function SSF abgeholt und dem Billing Service BS zur Verarbeitung zugeführt. Kommunikationsdatensätze KDS sind für jede zustanden gekommene Kommunikationsverbindung, d.h. für alle unter Inanspruchnahme des Dienstes in das Festnetz umgeleiteten Verbindungen relevant, für die eine Gutschrift erstellt werden soll. Der Kommunikationsdatensatz KDS enthält unter anderem folgende Daten:
- - Gewählte Rufnummer: (Funknetz- Rufnummer FNB des Teilnehmers B)
- - Festnetz-Rufnummer Teilnehmer: A (Ursprung des Anrufes)
- - Festnetz-Rufnummer Teilnehmer: B (HNB oder PNB als Ziel)
- - Festnetz-Rufnummer HNB: (Gutschriftzuordnung)
- - Beginn der Verbindung: (Datum/Uhrzeit)
- - Dauer der Verbindung: (Zeitangabe)

Alle Kundendatensätze KDS für einen Festnetzkunden, die in eine Abrechnungsperiode fallen, werden aufaddiert und in einer Gutschriftposition in der Fernmelderechnung des Home-Anschlusses erfasst und berücksichtigt. Dies geschieht vorteilhaft dadurch, dass den in den Kommunikationsdatensätzen KDS dokumentierten Gesprächsminuten ein negativer Preis zugeordnet wird.

Zur Erleichterung der Aktivierung bzw. der Deaktivierung der Umschaltfunktion ist am Standort der Home- und/oder der Partner- Nummer (HNB/PNB) eine Vorrichtung vorgesehen, die eine automatische Aktivierung des Dienstes ermöglicht. Die Vorrichtung ist als Umschaltvorrichtung in Form einer Ablageschale für ein mobiles Funknetz-Endgerät konzipiert, in welche das mobile Funkruf-Endgerät des Teilnehmers B, beispielsweise ein Mobilfunkhandy, abgelegt werden kann. Diese Vorrichtung ist als weiteres Festnetzendgerät an die dazugehörige Netzabschlusseinrichtung (z.B. TAE oder NTBA) angeschaltet. Durch das Ablegen des mobilen Funknetz-Endgerätes (Handy) in die Ablagemulde der Ablageschale wird ein dort angeordnetes Schaltelement betätigt, das über eine einprogrammierte Servicerufnummer für Statusänderungen den Dienst aktiviert bzw. deaktiviert. Das Schaltelement kann beispielsweise als mechanischer Kontakt ausgebildet sein. Für die Vorrichtung sind zwei Ausführungen vorgesehen, wobei eine Ausführung für die Anschaltung an Analog-Anschlüsse konzipiert ist. Die andere Ausführung ist für ISDN-Anschlüsse vorgesehen und daher bezüglich der MSN (Multiple Subscriber Number) programmierbar.

Bei abgenommenem Handy wird der zugehörige Steueranruf mit einer Verzögerung ausgelöst. Mit der Verzögerung soll erreicht werden, dass beim Abnehmen des Handys und entsprechender Betätigung des Kontaktes nach einem Anruf aus einem Funknetz (solche Anrufe werden nicht in das Festnetz umgeleitet) sofort der Status @Mobile aktiviert wird.

Eine zusätzliches, manuell zu betätigendes zweites Schaltelement, das ebenfalls auf der Umschaltvorrichtung angeordnet ist, löst das unmittelbare und unverzögerte Absetzen der programmierten Servicerufnummer und damit des Steueranrufes aus. Durch diese Ausführungsform soll statt einer Verzögerung beim Verlassen des Festnetzanschlusses ein sofortiges Umschalten auf die mobile Erreichbarkeit ermöglicht werden. Auf der Umschaltvorrichtung gut sichtbar angeordnete Anzeigeelemente, vorzugsweise in Form von Leuchtdioden, zeigen die möglichen Schaltzustände der Vorrichtung an. Der Kunde kann daran seine aktuelle Erreichbarkeit, entweder am Festnetz-Anschluss oder am Funknetz- Anschluss, erkennen.

Wegen des Bezugs auf die Ursprungsnummer CgPNo, die von der Dienstplattform INP erkannt und zur Ermittlung des gewünschten Erreichbarkeitsstatus herangezogen wird, kann die Umschaltvorrichtung gleichermaßen in der Nähe der Home-Nummer HNB und/oder der Partner-Nummer PNB eingesetzt werden.

Alternativ kann die Vorrichtung auch mit einem Lautsprecher ausgestattet sein, um die akustische Wiedergabe der im Netz integrierten Ansagen zu gewährleisten. Weiterhin kann die Vorrichtung auch als schnurlose Ausführung im DECT/GAP-Standard zum Betrieb an Analog- und ISDN-Anschlüssen ausgebildet sein.

### Bezugszeichenaufstellung

- INP: Diensteplattform im Intelligenten Netz
- KDS: Kommunikationsdatensatz
- BS: Billing Service
- A: Teilnehmer A (anrufender Teilnehmer)
- B: Teilnehmer B (angerufener Teilnehmer)
- FNB: Funknetz- Rufnummer (Teilnehmer B)
- HNB: Home-Nummer (Teilnehmer B)
- PNB: Partner Nummer (Teilnehmer B)
- SSF: Service Switching Function
- YEn: Vermittlungseinheit
- TDP3: Trigger Detection Point 3
- CgPNo: Ursprungsnummer (Calling Party Number)
- RdgNo: Redirecting Nummer (weiterleitende Rufnummer)
- MSN: Multiple Subscriber Number
- RP: Registrierungsplattform
- T *AEINTBA*: analoge oder digitale Netzabschlusseinrichtung

## Patentansprüche

1. Verfahren zur kostengünstigen Umleitung von Anrufen, bei dem unter Inanspruchnahme eines Dienstes für die Rufumleitung für ein erstes Endgerät eines Teilnehmer (B) bestimmte Anrufe nach dem Prinzip der Rufumleitung zu einem zweiten alternativen Endgerät des Teilnehmers (B) umgeleitet werden, so
a. dass nach der Aktivierung einer entsprechenden Rufumleitungsfunktion über eine Servicerufnummer immer dann ein von einem Endgerät eines ersten Teilnehmers (A) ausgehender Anruf, der für ein erstes Endgerät eines zweiten Teilnehmers (B) bestimmt ist, zu einem zweiten alternativen Endgerät des Teilnehmers (B) umgeleitet wird, wenn erkannt wird, dass für die Herstellung des Verbindungswunsches des ersten Teilnehmers (A) ein netzübergreifender Verbindungsaufbaus zwischen dem Endgerät des ersten Teilnehmers (A) und dem ersten Endgerät des zweiten Teilnehmers (B) notwendig ist, wobei die Rufumleitungsfunktion nur eine Rufumleitung zu einem zweiten Endgerät des zweiten Teilnehmers (B) zulässt, das dem gleichen Kommunikationsnetz zuzuordnen ist, wie das Endgerät des ersten Teilnehmers (A) von dem der Anruf ausgeht, so dass bei erfolgreichem Verbindungsaufbau die Kommunikation zwischen dem ersten Teilnehmer (A) und dem zweiten Teilnehmer (B) ausschließlich über ein Kommunikationsnetz geführt wird,
b. dass der Dienst für eine Rufumleitung aus dem Festnetz ausgehender und für ein erstes mobiles Funknetz-Endgerät des Teilnehmers (B) bestimmter Anrufe mit Hilfe einer Ablageschale für das mobiles Funknetz-Endgerät des Teilnehmers (B) aktiviert oder deaktiviert wird, indem beim Auflegen dieses ersten Endgeräts des Teilnehmers (B) auf die Ablageschale, welche am Standort des zweiten alternativen Endgeräts des Teilnehmers (B) mit einer Home- oder Partner- Nummer (HNB; PNB) im Festnetz angeordnete ist, ein erstes Schaltelement der Ablageschale betätigt und hierdurch ein Anruf zu einer vorgespeicherten, den Dienst aktivierenden Servicenummer aktiviert wird und **dadurch gekennzeichnet, dass** beim Entfernen des ersten Endgerats des Teilnehmers (B) aus der Ablageschale das erste Schaltelement erneut betätigt und hierdurch zeitlich verzögert ein Anruf zu einer vorgespeicherten, den Dienst deaktivierenden Servicenummer erfolgt, wobei der Teilnehmer (B) aber durch manuelle Betätigung eines zweiten Schaltelements der Ablageschale ein unmittelbares und unverzögertes Absetzen des Anrufs der den Dienst deaktivierenden Servicerufnummer auslösen kann, so dass eine sofortige mobile Erreichbarkeit des mobilen Funknetz- Endgerätes des zweiten Teilnehmers (B) gegeben ist,
c. dass bei jedem erfolgreichen Gesprächsaufbau die jeweils zum Gespräch generierten Kommunikationsdatensätze (KDS) erfasst, und im Verarbeitungssystem des Billing Services (BS) zur Bestimmung der eingesparten Netzübergangskosten ausgewertet werden, wobei nach der Ermittlung der eingesparten Netzübergangskosten dem zweiten Teilnehmer (B) ein frei festlegbarer Teil der eingesparten Netzübergangskosten, vorzugsweise in Form einer Gutschrift, auf seiner Fernmelderechnung zugewiesen wird.

2. Verfahren nach Anspruch1, **dadurch gekennzeichnet, dass** ein von einem Festnetz-Endgerät des ersten Teilnehmers (A) ausgehender Anruf, der für eine Funknetz-Rufnummer (FNB) des zweiten Teilnehmers (B) bestimmt ist, bei aktivierter Umleitungsfunktion zu einer Festnetz-Rufnummer des zweiten Teilnehmers (B) umgeleitet wird, so dass bei erfolgreichem Verbindungsaufbau die Kommunikation zwischen dem ersten Teilnehmer (A) und dem zweiten Teilnehmer (B) ausschließlich über das Festnetz geführt wird.

3. Verfahren nach Anspruch1, **dadurch gekennzeichnet, dass** ein von einem Funknetz-Endgerät des ersten Teilnehmers (A) ausgehender Anruf, der für eine Festnetz-Rufnummer des zweiten Teilnehmers (B) bestimmt ist, bei aktivierter Umleitungsfunktion zu einer Funknetz-Rufnummer (FNB) des zweiten Teilnehmers (B) umgeleitet wird, so dass bei erfolgreichem Verbindungsaufbau die Kommunikation zwischen dem ersten Teilnehmer (A) und dem zweiten Teilnehmer (B) ausschließlich über das Funknetz geführt wird.

4. Verfahren nach einem der vorhergehenden Ansprüche, **dadurch gekennzeichnet, dass** die Registrierung für den Dienst über einen Userdialog mit dem Dialogsystem der Dienstplattform (INP) über eine Servicerufnummer erfolgt, wobei der zweite Teilnehmer (B) gegenüber dem Dialogsystem mindestens eine seiner Funknetz-Rufnummer (FNB) und mindestens eine seiner Festnetz-Rufnummer bekannt gibt, und dass die beiden Rufnummern (FNB; HNB) nach einer PIN gestützten Berechtigungsprüfung des zweiten Teilnehmers (B) miteinander verknüpft und in einer dem Dienst zugeordneten Dienstplattform (INP) als gültig eingetragen werden, wobei die Festnetz-Rufnummer als Home-Nummer (HNB) eingetragen wird.

5. Verfahren nach Anspruch 4, **dadurch gekennzeichnet**, das nach Erkennung einer gültigen PIN dem zweiten Teilnehmer (B) die Eintragung mindestens einer zweiten Festnetz-Rufnummer angeboten wird, die als alternative Partner-Nummer (PNB) zur Home-Nummer (HNB) konzipiert ist, und dass nach Annahme des Angebotes die Partner-Nummer (PNB) mit der bereits gespeicherten Funkruf-Nummer (FNB) und der Home-Nummer (HNB) verknüpft und ebenfalls in der dem Dienst zugeordneten Dienstplattform (INP) gespeichert wird.

6. Verfahren nach einem der vorhergehenden Ansprüche, **dadurch gekennzeichnet, dass** zur Aktivierung des Dienstes Servicerufnummern genutzt werden, wobei nach der Anwahl einer Servicerufnummer durch den zweiten Teilnehmer (B) die Ursprungsrufnummer (CgPNo) des anrufenden zweiten Teilnehmers (B) ermittelt wird, und dass nach Identifizierung der Ursprungsrufnummer (CgPNo) als für den Dienst registrierte Funknetz-Rufnummer FNB, Home-Nummer HNB oder Partner-Nummer PNB auf der Diensteplattform (INP) ein der jeweiligen Servicerufnummer zugeordneter Status für die Rufweiterleitung gesetzt wird, wobei bis zur Änderung des aktuellen Status alle weiteren Anrufe aus dem Festnetz, die für die zugeordnete Funknetz-Rufnummer (FNB) bestimmt sind, auf die durch den Status definierte Home-Nummer (HNB) oder Partner-Nummer (PNB) umgeleitet werden.

7. Verfahren nach einem der vorhergehenden Ansprüche, **dadurch gekennzeichnet, dass** der bei aktiviertem Dienst nach der Anwahl einer Funknetz- Rufnummer (FNB) des zweiten Teilnehmers (B) von einem Festnetz-Endgerät eines ersten Teilnehmers (A) ausgehende Anruf zu dem durch den aktuellen Status definierten Festnetz-Endgerät (HNB; PNB) des zweiten Teilnehmers (B) umgeleitet wird, wobei eine Umleitung nur erfolgt, wenn der Anruf aus einem für diesen Dienst vorgesehenen Festnetz erfolgt, und wenn die Ursprungsnummer (CgPNo) und die Redirecting Number (RdgNo) nicht mit dem Umleitungsziel identisch sind, und dass bei nicht aktiviertem Dienst der ankommende Anruf zu der vom ersten Teilnehmer (A) angewählten Funknetz-Rufnummer (FNB) des zweiten Teilnehmers (B) weitergeleitet wird.

8. Vorrichtung zur kostengünstigen Umleitung von Anrufen, welche als Ablageschale für ein mobiles Funknetz-Endgerät mit integrierter Umschaltefunktion ausgebildet ist, welche am Standort der Home- und/oder der Partner- Nummer (HNB; PNB) angeordnet ist, wobei die Ablageschale in ihrer Auflagemulde ein erstes Schaltelement aufweist, welches sowohl durch das Auflegen, als auch das Entfernen des der Ablageschale zugeordneten mobilen Funknetz-Endgerätes des zweiten Teilnehmers (B) betätigt wird, wobei beim Auflegen des mobilen Funknetz- Endgerätes eine vorgespeicherte Servicerufnummer aktiviert und ausgelöst wird, die ihrerseits einen Dienst aktiviert, der alle für das mobile Funknetz-Endgerät bestimmten Anrufe zu dem als Home- oder der Partner- Nummer (HNB; PNB) registrierten Festnetz-Endgerät umleitet, dem die Ablageschale zugeordnet ist, und wobei nach Entfernen des mobilen Funknetz-Endgerätes aus der Ablagevorrichtung und der damit verbundenen erneuten Betätigung des Schaltelementes über die dadurch ausgelöste Servicerufnummer die Umschaltfunktion wieder rückgängig gemacht wird, **dadurch gekennzeichnet, dass** das erste Schaltelement als mechanisch zu betätigender Zeitschaltkontakt ausgebildet ist, der nach Betätigung durch Entfernen eines mobilen Funknetz-Endgerätes aus der Ablageschale zeitlich verzögert die Umschaltfunktion auslöst und wobei die Ablageschale ein zusätzliches zweites Schaltelement aufweist, welches nach manueller Betätigung durch den zweiten Teilnehmer (B) ein unmittelbares und unverzögertes Absetzen der programmierten Servicerufnummer für die Deaktivierung der Rufumleitung auslöst, so dass eine sofortige mobile Erreichbarkeit des mobilen Funknetz- Endgerätes des zweiten Teilnehmers (B) gegeben ist.

9. Vorrichtung nach Anspruch 8, **dadurch gekennzeichnet, dass** die Ablageschale die Form der Ladeschale eines mobilen Funknetz-Endgerätes aufweist.

10. Vorrichtung nach einem der vorhergehenden Ansprüche, **dadurch gekennzeichnet, dass** die Ablageschale neben der integrierten Umschaltfunktion gleichzeitig eine Ladefunktion für ein mobiles Funknetz-Endgerät aufweist.

11. Vorrichtung nach einem der vorhergehenden Ansprüche, **dadurch gekennzeichnet, dass** im sichtbaren Bereich der Vorrichtung vorzugsweise als Leuchtdioden ausgebildete Anzeigeelemente angeordnet sind, die die aktuelle Erreichbarkeit des zweiten Teilnehmers (B), entweder am genutzten Festnetz-Anschluss, oder aber am Funknetz-Anschluss anzeigen.

12. Vorrichtung nach einem der vorhergehenden Ansprüche, **dadurch gekennzeichnet, dass** sie einen integrierten Lautsprecher aufweist, der eine die jeweilige Umschaltung quittierende Ansage ausgibt.

13. Vorrichtung nach einem der vorhergehenden Ansprüche, **dadurch gekennzeichnet, dass** sie als schnurloses Endgerät nach dem DECT/GAP Standard ausgebildet ist.

14. Vorrichtung nach einem der vorhergehenden Ansprüche, dadurch gekenntzeichnet, sie entsprechend der Zuordnung des jeweiligen Festnetz-Endgerätes, an der analogen Netzabschlusseinrichtung (TAE) bzw. an der digitalen Netzabschlusseinrichtung (NTBA) des als Home-Nummer (HNB) oder Partner-Nummer (PNB) registrierten Festnetz-Endgerätes angeschaltet ist.

## Claims

1. Process for cost-effective redirection of calls, wherein, by utilising a service for call redirection, calls destined for a first terminal device of a subscriber (B) are redirected to a second, alternative terminal device of subscriber (B) in accordance with the principle of call redirection, so
a. that after the activation of an appropriate call-redirection function via a service call number a call originating from a terminal device of a first subscriber (A), which is destined for a first terminal device of a second subscriber (B), is redirected to a second, alternative terminal device of subscriber (B) whenever it is detected that a cross-network set-up of a connection between the terminal device of the first subscriber (A) and the first terminal device of the second subscriber (B) is necessary for the establishment of the connection request of the first subscriber (A), whereby the call-redirection function only permits a redirection of a call to a second terminal device of the second subscriber (B) that is to be assigned to the same communications network as the terminal device of the first subscriber (A) from which the call originates, so that upon successful set-up of a connection the communication between the first subscriber (A) and the second subscriber (B) is conducted exclusively via one communications network,
b. that the service for a redirection of calls originating from the fixed network and destined for a first mobile radio-network terminal device of subscriber (B) is activated or deactivated with the aid of a storage tray for the mobile radio-network terminal device of subscriber (B), inasmuch as when this first terminal device of subscriber (B) is replaced onto the storage tray, which is arranged at the location of the second, alternative terminal device of subscriber (B) having a home number or partner number (HNB; PNB) in the fixed network, a first switching element of the storage tray is actuated and, by this means, a call to a prestored service number activating the service is activated, **characterised in that** when the first terminal device of subscriber (B) is removed from the storage tray the first switching element is actuated again and, by this means, a call is made in temporally delayed manner to a prestored service number deactivating the service, whereby, however, subscriber (B) can trigger, by manual actuation of a second switching element of the storage tray, an immediate and undelayed transmission of the call of the service call number deactivating the service, so that an instant mobile accessibility of the mobile radio-network terminal device of the second subscriber (B) is ensured,
c. that upon each successful set-up of a telephone call the generated communication data records (KDS) relating to the telephone call in the given case are captured and are evaluated in the processing system of the billing service (BS) for determining the saved network-gateway costs, whereby after the ascertainment of the saved network-gateway costs a freely definable portion of the saved network-gateway costs is allocated to the second subscriber (B) on his/her telecommunication bill, preferentially in the form of a credit.

2. Process according to Claim 1, **characterised in that** a call that originates from a fixed-network terminal device of the first subscriber (A) and that is destined for a radio-network call number (FNB) of the second subscriber (B) is redirected, when the redirection function is activated, to a fixed-network call number of the second subscriber (B), so that upon successful set-up of a connection the communication between the first subscriber (A) and the second subscriber (B) is conducted exclusively via the fixed network.

3. Process according to Claim 1, **characterised in that** a call that originates from a radio-network terminal device of the first subscriber (A) and that is destined for a fixed-network call number of the second subscriber (B) is redirected, when the redirection function is activated, to a radio-network call number (FNB) of the second subscriber (B), so that upon successful set-up of a connection the communication between the first subscriber (A) and the second subscriber (B) is conducted exclusively via the radio network.

4. Process according to one of the preceding claims, **characterised in that** the registration for the service takes place via a user dialogue with the dialogue system of the service platform (INP) via a service call number, whereby the second subscriber (B) announces to the dialogue system at least one of his/her radio-network call numbers (FNB) and at least one of his/her fixed-network call numbers, and **in that** the two call numbers (FNB; HNB) are linked to one another after a PIN-based authorisation check of the second subscriber (B) and are logged as valid on a service platform (INP) assigned to the service, whereby the fixed-network call number is logged as home number (HNB).

5. Process according to Claim 4, **characterised in that** after detection of a valid PIN the logging of at least one second fixed-network call number, which is conceived as an alternative partner number (PNB) to the home number (HNB), is offered to the second subscriber (B), and **in that** after acceptance of the offer the partner number (PNB) is linked with the already stored radio-network call number (FNB) and with the home number (HNB) and is likewise stored on the service platform (INP) assigned to the service.

6. Process according to one of the preceding claims, **characterised in that** service call numbers are utilised for activating the service, whereby after a service call number has been dialled by the second subscriber (B) the originating call number (CgPNo) of the calling second subscriber (B) is ascertained, and **in that** after identification of the originating call number (CgPNo) as the radio-network call number (FNB), home number (HNB) or partner number (PNB) registered for the service a status, assigned to the respective service call number, for the forwarding of the call is set on the service platform (INP), whereby up until a change of the current status all further calls from the fixed network that are destined for the assigned radio-network call number (FNB) are redirected to the home number (HNB) or partner number (PNB) defined by the status.

7. Process according to one of the preceding claims, **characterised in that** when the service is activated after the dialling of a radio-network call number (FNB) of the second subscriber (B) a call originating from a fixed-network terminal device of a first subscriber (A) is redirected to the fixed-network terminal device (HNB; PNB), defined by the current status, of the second subscriber (B), whereby a redirection takes place only if the call is made from a fixed network provided for this service and if the originating number (CgPNo) and the redirecting number (RdgNo) are not identical with the redirection destination, and **in that** when the service is not activated the incoming call is forwarded to the radio-network call number (FNB) of the second subscriber (B) dialled by the first subscriber (A) .

8. Device for cost-effective redirection of calls, which takes the form of a storage tray for a mobile radio-network terminal device with integrated switch-over function and which is arranged at the location of the home number and/or partner number (HNB; PNB), at which the storage tray exhibits in its replacement trough a first switching element which is actuated both by the replacement and by the removal of the mobile radio-network terminal device, assigned to the storage tray, of the second subscriber (B), whereby upon replacement of the mobile radio-network terminal device a prestored service call number is activated and disconnected which, in turn, activates a service that redirects all the calls destined for the mobile radio-network terminal device to the fixed-network terminal device registered as home number or partner number (HNB; PNB), to which the storage tray is assigned, and at which after removal of the mobile radio-network terminal device from the storage apparatus and after the associated renewed actuation of the switching element via the service call number disconnected thereby the switch-over function is cancelled, **characterised in that** the first switching element takes the form of a time-switching contact to be actuated mechanically, which triggers the switch-over function in temporally delayed manner after actuation by removal of a mobile radio-network terminal device from the storage tray, and whereby the storage tray exhibits an additional, second switching element which after manual actuation by the second subscriber (B) triggers an immediate and undelayed transmission of the programmed service call number for the deactivation of the call redirection, so that an instant mobile accessibility of the mobile radio-network terminal device of the second subscriber (B) is ensured.

9. Device according to Claim 8, **characterised in that** the storage tray exhibits the shape of the charging tray of a mobile radio-network terminal device.

10. Device according to one of the preceding claims, **characterised in that** in addition to the integrated switch-over function the storage tray has, at the same time, a charging function for a mobile radio-network terminal device.

11. Device according to one of the preceding claims, **characterised in that** display elements preferentially taking the form of light-emitting diodes, which indicate the current accessibility of the second subscriber (B) either on the fixed-network interface being utilised or alternatively on the radio-network interface, are arranged in the visible region of the device.

12. Device according to one of the preceding claims, **characterised in that** it exhibits an integrated loudspeaker which outputs an announcement acknowledging the respective switch-over.

13. Device according to one of the preceding claims, **characterised in that** it takes the form of a cordless terminal device according to the DECT/GAP standard.

14. Device according to one of the preceding claims, **characterised in that** it has been connected, in accordance with the assignment of the respective fixed-network terminal device, to the analogue network terminator (TAE) or to the digital network terminator (NTBA) of the fixed-network terminal device registered as home number (HNB) or partner number (PNB).

## Revendications

1. Procédé de renvoi économique d'appel, selon lequel certains appels sont renvoyés selon le principe du renvoi d'appel vers un deuxième terminal alternatif d'un abonné (B) en ayant recours à un service pour le renvoi d'appel pour un premier terminal de l'abonné (B), de sorte
a. qu'après l'activation d'une fonction de renvoi d'appel correspondante par le biais d'un numéro d'appel de service, un appel sortant d'un terminal d'un premier abonné (A) et destiné à un premier terminal d'un deuxième abonné (B) est toujours renvoyé vers un deuxième terminal alternatif de l'abonné (B) lorsqu'il est détecté que l'établissement d'une liaison interréseau entre le terminal du premier abonné (A) et le premier terminal du deuxième abonné (B) est nécessaire pour l'établissement de la liaison souhaitée du premier abonné (A), la fonction de renvoi d'appel n'autorisant qu'un renvoi d'appel vers un deuxième terminal du deuxième abonné (B) qui est à associer au même réseau de communication que le terminal du premier abonné (A) duquel provient l'appel, de sorte que si l'établissement de la liaison aboutit, la communication entre le premier abonné (A) et le deuxième abonné (B) se déroule exclusivement par le biais d'un réseau de communication,
b. que le service pour un renvoi d'appel de certains appels sortant du réseau fixe et destinés à un premier terminal de réseau de radiocommunication mobile de l'abonné (B) est activé ou désactivé à l'aide d'une coque d'accueil pour le terminal de réseau de radiocommunication mobile de l'abonné (B) en ce qu'en posant ce premier terminal de l'abonné (B) sur la coque d'accueil, laquelle est disposée dans le réseau fixe à l'emplacement du deuxième terminal alternatif de l'abonné (B) avec un numéro de domicile ou de partenaire (HNB ; PNB), un premier élément de commutation de la coque d'accueil est actionné et un appel vers un numéro de service préenregistré qui active le service est ainsi activé, et
**caractérisé en ce que**
en retirant le premier terminal de l'abonné (B) de la coque d'accueil, le premier élément de commutation est de nouveau actionné et un appel vers un numéro de service préenregistré qui désactivé le service est ainsi effectué de manière retardée, l'abonné (B) pouvant cependant déclencher immédiatement et sans retard une transmission de l'appel du numéro de service qui désactivé le service par un actionnement manuel d'un deuxième élément de commutation de la coque d'accueil, de sorte que le terminal de réseau de radiocommunication mobile du deuxième abonné (B) devient immédiatement accessible en mobilité,
c. que lors de chaque établissement d'appel ayant abouti, les jeux de données de communication (KDS) respectivement générés à propos de l'appel sont collectés et interprétés dans le système de traitement des services de facturation (BS) en vue de déterminer le coût interréseau économisé, une partie pouvant être définie librement du coût interréseau économisé, de préférence sous la forme d'un avoir, étant attribuée à la facture téléphonique du deuxième abonné (B) après la détermination du coût interréseau économisé.

2. Procédé selon la revendication 1, **caractérisé en ce qu'**un appel sortant d'un terminal de réseau fixe du premier abonné (A), lequel est destiné à un numéro d'appel de réseau de radiocommunication (FNB) du deuxième abonné (B), si la fonction de renvoi est activée, est renvoyé vers un numéro d'appel de réseau fixe du deuxième abonné (B), de sorte que si l'établissement de la liaison aboutit, la communication entre le premier abonné (A) et le deuxième abonné (B) se déroule exclusivement par le biais du réseau fixe.

3. Procédé selon la revendication 1, **caractérisé en ce qu'**un appel sortant d'un terminal de réseau de radiocommunication du premier abonné (A), lequel est destiné à un numéro d' appel de réseau fixe du deuxième abonné (B), si la fonction de renvoi est activée, est renvoyé vers un numéro d'appel de réseau de radiocommunication (FNB) du deuxième abonné (B), de sorte que si l'établissement de la liaison aboutit, la communication entre le premier abonné (A) et le deuxième abonné (B) se déroule exclusivement par le biais du réseau de radiocommunication.

4. Procédé selon l'une des revendications précédentes, **caractérisé en ce que** l'inscription pour le service s'effectue par le biais d'un dialogue d'utilisateur avec le système de dialogue de la plate-forme de service (INP) par le biais d'un numéro d'appel de service, le deuxième abonné (B) faisant connaître au système de dialogue au moins l'un de ses numéros d'appel de réseau de radiocommunication (FNB) et au moins l'un de ses numéros d'appel de réseau fixe, et **en ce que** les deux numéros d'appel (FNB ; HNB) sont liés ensemble d'après un contrôle d'autorisation protégé par PIN du deuxième abonné (B) et enregistrés comme étant valides dans une plate-forme de service (INP) associée au service, le numéro d'appel de réseau fixe étant saisi en tant que numéro de domicile (HNB).

5. Procédé selon la revendication 4, **caractérisé en ce qu'**après la reconnaissance d'un PIN valide, le deuxième abonné (B) est invité à saisir au moins un deuxième numéro d'appel de réseau fixe qui est conçu en tant que numéro de partenaire (PNB) alternatif au numéro de domicile (HNB), et **en ce qu'**après l'acceptation de l'invitation, le numéro de partenaire (PNB) est lié au numéro d'appel de réseau de radiocommunication (FNB) et au numéro de domicile (HNB) déjà enregistrés, puis également enregistré dans la plate-forme de service (INP) associée au service.

6. Procédé selon l'une des revendications précédentes, **caractérisé en ce que** des numéros d'appel de service sont utilisés pour l'activation du service, le numéro d'appel originel (CgPNo) du deuxième abonné (B) appelant étant déterminé après la composition d'un numéro d'appel de service par le deuxième abonné (B), et **en ce qu'**après l'identification du numéro d'appel originel (CgPNo), un état associé au numéro d'appel de service respectif est défini pour le renvoi d'appel sur la plate-forme de service (INP) en tant que numéro d'appel de réseau de radiocommunication FNB, numéro de domicile HNB ou numéro de partenaire PNB inscrit pour le service, tous les appels supplémentaires provenant du réseau fixe qui sont destinés au numéro d'appel de réseau de radiocommunication (FNB) associé étant renvoyés au numéro de domicile (HNB) ou au numéro de partenaire (PNB) définis par l'état jusqu'à la modification de l'état actuel.

7. Procédé selon l'une des revendications précédentes, **caractérisé en ce que** l'appel sortant d'un terminal de réseau fixe d'un premier abonné (A), lorsque le service est activé après la composition d'un numéro d'appel de réseau de radiocommunication (FNB) du deuxième abonné (B), est renvoyé vers le terminal de réseau fixe (HNB ; PNB) du deuxième abonné (B) défini par l'état actuel, un renvoi n'ayant lieu que si l'appel est effectué depuis un réseau prévu pour ce service et lorsque le numéro d'appel originel (CgPNo) et le numéro de renvoi (RdgNo) ne sont pas identiques à la destination du renvoi, et **en ce que** lorsque le service n'est pas activé, l'appel entrant est transféré vers le numéro d'appel de réseau de radiocommunication (FNB) du deuxième abonné (B) composé par le premier abonné (A).

8. Dispositif de renvoi économique d'appel, lequel est réalisé sous la forme d'une coque d'accueil pour un terminal de réseau de radiocommunication mobile avec fonction d'inversion intégrée, lequel est disposé à l'emplacement du numéro de domicile et/ou de partenaire (HNB ; PNB), la coque d'accueil possédant dans sa cavité d'accueil un premier élément de commutation qui est actionné à la fois par la dépose et par le retrait du terminal de réseau de radiocommunication mobile du deuxième abonné (B) associé à la coque d'accueil, un numéro d'appel de service préenregistré étant activé et déclenché lors de la dépose du terminal de réseau de radiocommunication mobile qui, de son côté, active un service qui renvoie tous les appels destinés au terminal de réseau de radiocommunication mobile vers le terminal de réseau fixe inscrit en tant que numéro de domicile ou de partenaire (HNB ; PNB) auquel est associé la coque d'accueil, et après avoir retiré le terminal de réseau de radiocommunication mobile du dispositif d'accueil et le nouvel actionnement qui y est lié de l'élément de commutation, la fonction d'inversion étant de nouveau annulée par le biais du numéro d'appel de service ainsi déclenché, **caractérisé en ce que** le premier élément de commutation est réalisé sous la forme d'un contact à commutation temporisée à actionner mécaniquement qui, après un actionnement par le retrait d'un terminal de réseau de radiocommunication mobile de la coque d'accueil, déclenche la fonction d'inversion de manière retardée et la coque d' accueil possédant un deuxième élément de commutation supplémentaire qui, après un actionnement manuel par le deuxième abonné (B), déclenche immédiatement et sans retard une transmission de l'appel du numéro de service programmé pour la désactivation du renvoi d'appel, de sorte que le terminal de réseau de radiocommunication mobile du deuxième abonné (B) devient immédiatement accessible en mobilité.

9. Dispositif selon la revendication 8, **caractérisé en ce que** la coque d'accueil présente la forme d'une coque de charge d'un terminal de réseau de radiocommunication mobile.

10. Dispositif selon l'une des revendications précédentes, **caractérisé en ce que** la coque d'accueil, outre la fonction d'inversion intégrée, possède en même temps une fonction de charge pour un terminal de réseau de radiocommunication mobile.

11. Dispositif selon l'une des revendications précédentes, **caractérisé en ce que** des éléments indicateurs réalisés de préférence sous la forme de diodes électroluminescentes sont disposés dans la zone visible du dispositif, lesquels indiquent l'accessibilité actuelle du deuxième abonné (B), soit sur la prise de réseau fixe utilisée, ou alors sur la prise de réseau de radiocommunication.

12. Dispositif selon l'une des revendications précédentes, **caractérisé en ce qu'**il possède un haut-parleur intégré qui délivre une annonce d'acquittement de l'inversion respective.

13. Dispositif selon l'une des revendications précédentes, **caractérisé en ce qu'**il est réalisé sous la forme d'un terminal sans cordon selon la norme DECT/GAP.

14. Dispositif selon l'une des revendications précédentes, **caractérisé en ce qu'**il est connecté au dispositif terminal de réseau analogique (TAE) ou au dispositif terminal de réseau numérique (NTBA) du terminal de réseau fixe inscrit en tant que numéro de domicile (HNB) ou de numéro partenaire (PNB), conformément à l'association du terminal de réseau fixe respectif.
